# FASCICULE DE BREVET EUROPEEN

(11) **EP 0 491 613 B1**
(45) Date de publication et mention de la délivrance du brevet: **27.04.1994**
(21) Numéro de dépôt: 91403408.7
(22) Date de dépôt: 16.12.1991
(51) Int. Cl.: B25J 17/02

(54) **Dispositif manipulateur pour déplacer un objet, dans l'espace, parallèlement à lui-même**
Handhabungsgerät zum Bewegen eines Gegenstandes in Raum, z.B. parallel mit sichselbst
Manipulating device for moving an object in space, for instance parallel to itself

(30) Priorité: 18.12.1990 FR 9015846
(43) Date de publication de la demande: 24.06.1992
(73) Titulaire: Office National d'Etudes et de Recherches Aérospatiales (O.N.E.R.A.), 92320 Châtillon-sous-Bagneux (FR)
(72) Inventeur: Reboulet, Claude, F-31300 Castanet Tolosan (FR); Lambert, Claude, F-31520 Ramonville (FR)
(74) Mandataire: Gorree, Jean-Michel

(56) Documents cités:
- EP-A- 0 076 947
- EP-A- 0 263 627
- WO-A-87/03528
- GB-A- 1 080 074
- US-A- 3 160 290

## Description

La présente invention concerne des perfectionnements apportés aux dispositifs manipulateurs permettant de déplacer, dans l'espace, un objet de manière telle que celui-ci puisse conserver au cours de son déplacement une attitude prédéterminée, ledit dispositif comportant une embase fixe, un élément mobile constituant le susdit objet ou auquel est raccordé le susdit objet et au moins trois moyens actionneurs interposés entre la base et l'élément mobile et mutuellement écartés angulairement de façon régulière, chacun de ces moyens actionneurs étant actif dans un plan sensiblement vertical et comportant :
- une articulation déplaçable selon une trajectoire circulaire, sise dans le susdit plan sensiblement vertical,
- un organe moteur supporté par la base et connecté, à son extrémité mobile, à la susdite articulation, cet organe moteur étant apte à provoquer un déplacement linéaire, dans le susdit plan, de son extrémité mobile,
- et un organe de liaison de longueur fixe interposé entre l'élément mobile et l'articulation auxquels il est respectivement articulé en rotation. Un tel dispositif est décrit par exemple dans WO-A-87/03528

Dans ce dispositif manipulateur connu de ce type, l'organe moteur de chacun des moyens actionneurs est constitué par un vérin solidaire de la base et dont la partie mobile est animée d'un mouvement de translation selon une direction fixe, tandis que l'organe de liaison de longueur fixe est un parallélogramme déformable dont les petits côtés extrêmes sont articulés en rotation respectivement à la partie mobile du vérin et à l'élément mobile. Dans un tel agencement, pour maintenir constante la direction de chacun des petits côtés, c'est-à-dire pour empêcher la rotation autour de l'axe de translation, il est indispensable d'utiliser un système à glissières extrêmement précis et donc coûteux. De plus, ce système à glissières additionne son inertie à celle du vérin et de ce fait pénalise les performances en accélération du dispositif.

Or un dispositif manipulateur doit, d'une façon générale et quels qu'en soient le type et la structure, permettre un déplacement rapide et un positionnement rapide de l'élément mobile, ce qui implique qu'il soit susceptible de développer des accélérations élevées. Ceci ne peut être obtenu, d'une façon générale, qu'avec des structures mécaniques de poids, et donc d'inertie aussi faibles que possible.

Ainsi, le dispositif connu précité n'est pas satisfaisant de ce point de vue.

Par ailleurs, la solution des parallélogrammes déformables retenue pour constituer chaque organe de liaison dans le dispositif manipulateur connu présente l'inconvénient de restreindre l'espace de travail, en raison des possibilités limitées d'inclinaison angulaire mutuelle des bras des parallélogrammes. En effet, pour assurer la rigidité de la structure, il n'est pas souhaitable que la distance séparant les deux bras principaux du parallélogramme soit inférieure à une valeur minimale, ce qui limite en conséquence l'angle formé par deux bras adjacents.

En outre, la structure à parallélogramme présente l'inconvénient de posséder un nombre important d'articulations passives ; le jeu dans chacune de ces articulations influe bien entendu défavorablement sur la précision du déplacement ou du positionnement dont est capable le dispositif manipulateur.

L'invention a essentiellement pour but de remédier aux inconvénients ci-dessus exposés présentés par le dispositif manipulateur connu précité et de proposer un agencement perfectionné pour dispositif manipulateur du type décrit en introduction qui donne mieux satisfaction aux diverses exigences de la pratique, en particulier pour ce qui concerne son aptitude à des accélérations élevées et l'amplitude des mouvements des moyens actionneurs.

A ces fins, un dispositif manipulateur tel que défini en introduction se caractérise essentiellement, étant agencé conformément à l'invention, en ce que :
- l'organe moteur comprend au moins un vérin qui est supporté par la base de manière à pouvoir pivoter par rapport à celle-ci dans le susdit plan vertical,
- la trajectoire circulaire de l'articulation déplaçable est centrée en un point fixe de la base situé dans ledit plan vertical et ne coïncidant pas avec l'axe de pivotement du vérin constituant l'organe moteur,
- l'organe de liaison de longueur fixe comprend une barre supportant à ses extrémités deux pièces rotatives desquelles sont solidaires respectivement deux pièces de raccordement liées à rotation respectivement à la susdite articulation et à l'élément mobile, un organe de transmission d'attitude s'étendant, en outre, entre les deux pièces rotatives pour accoupler celles-ci de manière telle que tout déplacement en rotation de l'une des pièces rotatives soit transformé en un déplacement identique, en sens et en amplitude, de l'autre pièce rotative et que les axes de liaison à rotation des deux pièces de raccordement avec, respectivement, l'articulation et l'élément mobile demeurent en permanence mutuellement parallèles,
- toutes les articulations s'effectuant autour d'axes sensiblement perpendiculaires au susdit plan vertical.

Dans une forme particulière de réalisation de l'invention les deux pièces rotatives sont deux roues de sensiblement même diamètre.

Avantageusement, pour aboutir à une réalisation techniquement simple, l'organe de transmission d'attitude est un lien sans fin, de préférence une courroie crantée, s'enroulant sur les deux pièces rotatives.

De façon pratique, le rayon de la trajectoire circulaire de déplacement de l'articulation est matérialisé par une bielle s'étendant entre ladite articulation et le point fixe de la base auxquels il est articulé.

Dans un mode de réalisation possible, la bielle est une bielle de longueur fixe ; pour assurer un déplacement plus régulier, il peut alors être avantageux de prévoir que l'organe moteur comprenne deux vérins disposés, dans le susdit plan vertical, de part et d'autre de la bielle de longueur fixe.

Dans un autre mode de réalisation possible, qui élargit le domaine de fonctionnement du dispositif manipulateur, la bielle possède une longueur variable, et peut à cet effet être constituée par un vérin, ce grâce à quoi on peut ajuster le rayon de la trajectoire circulaire de l'articulation.

L'invention sera mieux comprise à la lecture de la description détaillée qui suit, d'un mode de réalisation préféré donné uniquement à titre purement illustratif. Dans cette description, on se réfère aux dessins annexés sur lesquels :
- la figure 1 est une vue d'ensemble en perspective d'un dispositif manipulateur conforme à l'invention;
- les figures 2 et 3 sont des vues en perspective, à plus grande échelle, de certains détails constructifs du dispositif manipulateur de la fig. 1 ; et
- les figures 4 et 5 sont des schémas illustrant respectivement deux variantes de réalisation du dispositif manipulateur de la fig. 1.

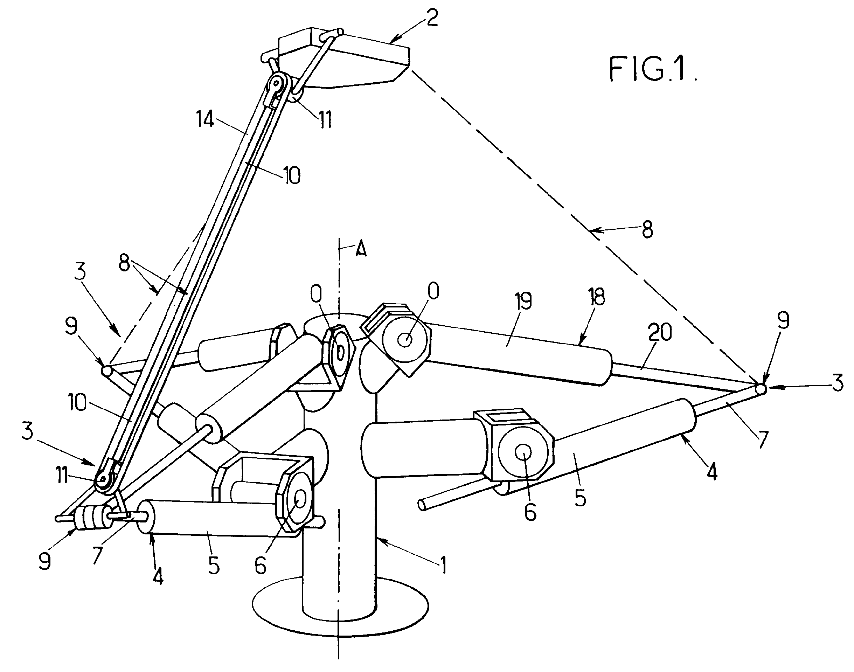

En se référant maintenant aux figures, et tout d'abord plus particulièrement à la figure 1, le dispositif manipulateur de l'invention comporte : une embase fixe 1, par exemple en forme de pylône ; un élément mobile 2 constituant l'objet ou auquel est raccordé l'objet devant être translaté parallèlement à lui-même, -c'est-à-dire devant être déplacé de manière qu'il garde au cours de son déplacement une attitude prédéterminée-; et trois moyens actionneurs désignés, chacun dans leur ensemble, par la référence numérique 3, ces moyens actionneurs étant interposés entre la base 1 et l'élément mobile 2 et étant mutuellement écartés angulairement de façon régulière, c'est-à-dire ici d'environ 120°.

Comme cela apparaîtra de façon plus claire ultérieurement, chacun des moyens actionneurs 3 est composé d'un ensemble de pièces articulées les unes aux autres ainsi qu'à la base 1 et à l'objet 2 d'une manière telle qu'il demeure en permanence dans un même plan moyen passant par l'axe central A de la base 1. Compte tenu de la représentation donnée à la figure du dispositif manipulateur, on dira, dans la suite de la description, que la base 1 repose sur un support horizontal et que l'axe A est de ce fait vertical, étant entendu toutefois qu'il s'agit là d'une simplification d'écriture et que le dispositif manipulateur peut être mis en oeuvre dans n'importe quelle position. Dans ce contexte, les trois plans moyens précités des moyens actionneurs seront dits être sensiblement verticaux.

Plus spécifiquement chacun des moyens actionneurs 3 comprend :
- un organe moteur comportant au moins un vérin 4 dont le corps de vérin 5 est articulé en rotation sur la base 1 par l'intermédiaire d'un axe horizontal 6, de manière que le vérin 4 puisse pivoter par rapport à la base dans un plan vertical, le corps de vérin 5 renfermant une tige de vérin 7 à déplacement linéaire ;
- un organe de liaison, désigné dans son ensemble par la référence 8, de longueur fixe et qui est interposé entre l'élément mobile 2 et l'extrémité libre de la tige de vérin 7 auxquels il est respectivement articulé,
- et une articulation, désignée dans son ensemble par la référence 9, assurant la liaison à rotation mutuelle entre l'extrémité libre de la tige de vérin 7 et l'extrémité correspondante de l'organe de liaison 8, cette articulation 9 étant déplaçable selon une trajectoire circulaire, sise dans le plan vertical moyen des moyens actionneurs correspondants et centrée en un point fixe O de la base ne coïncidant pas avec le susdit axe 6 de pivotement du vérin 4.

Comme représenté aux figures 1, 2 et 3, l'organe de liaison 8 de longueur fixe comprend une barre 10, rigide, supportant à ses extrémités respectivement deux pièces rotatives qui, dans une réalisation technologiquement simple telle que représentée aux figures, sont deux roues 11 de même diamètre. Ces deux roues sont solidaires en rotation de deux pièces de raccordement 12, 13 liées respectivement à l'articulation 9 et a l'élément mobile 2 avec un seul degré de liberté en rotation.

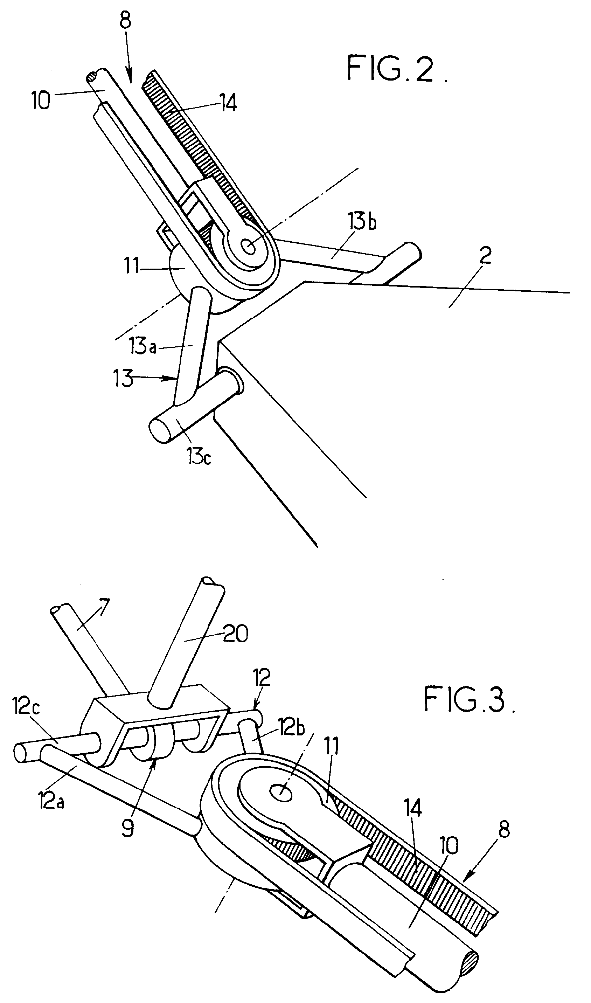

Dans l'exemple représenté a la figure 2, la pièce de raccordement 13 est une structure en triangle comprenant deux barreaux radiaux 13a et 13b solidaires de la roue 11 et solidarisés à un troisième barreau 13c raccordé à pivotement à l'élément mobile 2 de manière telle que l'axe de rotation de la roue 11 et l'axe de rotation du barreau 13c soient orthogonaux. De la même manière, dans l'exemple de la fig. 3, la pièce de raccordement 12 est une structure en triangle comprenant deux barreaux radiaux 12a et 12b solidaires de la roue 11 et solidarisés à un troisième barreau 12c sur lequel est fixée à pivotement l'extrémité de la tige de vérin 7, de manière telle que l'axe de rotation de la roue 11 et l'axe de rotation du barreau 12c soient orthogonaux. Les deux roues 11 ont des axes de rotation mutuellement parallèles et tous deux perpendiculaires à la barre 10.

En outre, un organe 14 de transmission d'attitude s'étend entre les deux roues 11 pour accoupler celles-ci de manière telle que tout déplacement angulaire de l'une de ces roues soit transformé en un déplacement angulaire identique, en sens et en amplitude, de l'autre roue et de manière que les deux barreaux 12c et 13c appartenant respectivement aux deux pièces de raccordement 12 et 13 demeurent en permanence mutuellement parallèles.

Bien que de nombreuses réalisations soient possibles pour constituer l'organe de transmission d'attitude 14, la solution qui s'avère à la fois la plus fiable et la plus simple est de constituer ledit organe 14 sous forme d'un lien sans fin souple et non extensible s'enroulant sur les deux roues 11 et coopérant en rotation sans glissement avec celles-ci. On aura ainsi avantageusement recours à des roues dentées et une courroie crantée, des roues dentées et une chaîne par exemple du type chaîne de Galle, ou tout autre agencement analogue procurant un accouplement sans glissement. Pour éviter de façon sûre le glissement du lien sans fin sur les roues, on peut en outre rendre l'organe de transmission 14 solidaire des roues 11 au moyen d'un index mécanique tel qu'une vis ou analogue (non représenté).

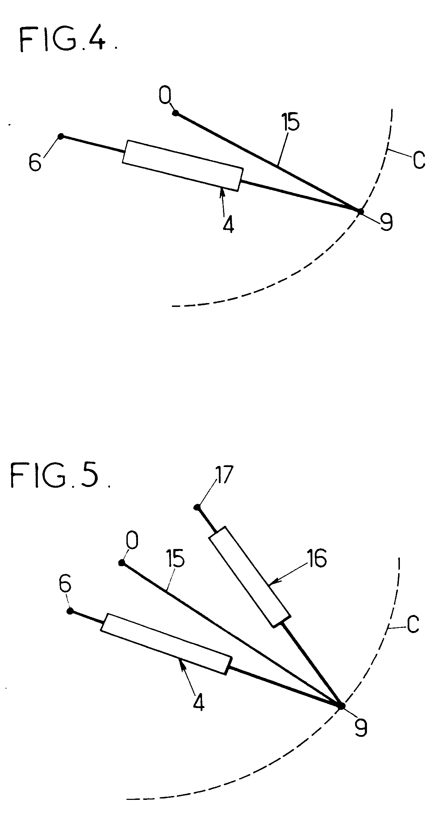

Pour ce qui est maintenant des moyens actionneurs, le maintien du barreau 12c de l'articulation 9 dans une position perpendiculaire au plan moyen vertical passant par l'axe A impose une liaison supplémentaire entre ce barreau 12c et un point fixe O de la base 1. Une telle liaison peut être constituée par une simple bielle 15 articulée à ses deux extrémités sur la base 1 en O et sur l'articulation 9 comme représentée à la fig. 4. Sous l'action motrice du vérin 4, l'articulation 9 se déplace alors sur une trajectoire circulaire C centrée en O et située dans le plan moyen vertical passant par l'axe A.

Il est également possible, comme représenté à la figure 5, de compléter la structure précédente par un second vérin 16 raccordé à rotation à ses deux extrémités, d'une part, à l'articulation 9 et, d'autre part, en un point fixe 17 de la base 1, les deux vérins 14 et 16 étant de préférence disposés de manière que O soit sensiblement au milieu des articulations 6 et 17. Là encore, l'articulation 9 ne peut que décrire une trajectoire circulaire C centrée en O et située dans le plan moyen vertical passant par l'axe A. La présence des deux vérins permet d'assurer le développement d'efforts plus uniformes quelle que soit la position de l'articulation 9 sur sa trajectoire C.

Toutefois, une solution technique qui semble particulièrement intéressante est celle représentée dans la vue d'ensemble de la figure 1 et selon laquelle la liaison entre le point O de la base 1 et l'articulation 9 est assurée par un vérin 18 ; le corps 19 de ce vérin est articulé en rotation sur la base 1 par un axe O transversal au plan moyen vertical et à l'axe A et la tige 20 de ce vérin est articulé en rotation sur le barreau 12c précité. Il s'agit en fait d'un montage constituant une variante de celui de la fig. 5 dans lequel on a supprimé la bielle rigide 15.

L'articulation 9 est ainsi libérée de la contrainte, imposée par la présence de la bielle rigide 15, de ne pouvoir se déplacer que sur une trajectoire circulaire C unique, et elle est maintenant. à même de parcourir une infinité de trajectoires circulaires centrées en O avec des rayons variables déterminés par la longueur modifiable du second vérin 18. Autrement dit, l'articulation 9 est libre d'occuper toute position dans le plan moyen vertical passant par l'axe A, en restant constamment parallèle à elle-même et perpendiculaire à ce plan.

Pour assurer cette propriété, il suffit qu'un seul des deux vérins 4 et 18 (par exemple le vérin 4) possède une articulation à rotation autour d'un axe fixe (en l'occurence l'axe 6), l'autre vérin (ici 18) pouvant avoir en O une articulation à plusieurs degrés de liberté du type Cardan ou rotule.

On notera également que, même si ce mode de réalisation à deux vérins 4 et 18 permet à chacune des tiges de vérin de tourner autour du barreau 12c qui les réunit à l'articulation 9 correspondante, cet ensemble est autobloquant, c'est-à-dire que le barreau 12c reste parallèle à lui-même (et perpendiculaire au plan moyen vertical) et parallèle aux axes d'articulation respectifs des deux corps des vérins 4 et 18 sans nécessiter de dispositif mécanique de guidage supplémentaire, contrairement à ce qui est impératif dans les dispositifs manipulateurs connus dont les moyens actionneurs n'incorporent qu'un seul vérin.

On remarquera, en outre, que la plupart des efforts sont exercés dans le plan moyen vertical passant par l'axe A. La structure est triangulée et il est ainsi possible de transmettre des efforts importants avec peu de matière, donc notamment avec des vérins dont les tiges peuvent être de faible masse. L'inertie des masses mobiles est ainsi réduite, conférant au dispositif des capacités d'accélération plus élevée.

Enfin, on remarquera que les moyens actionneurs à deux vérins 4 et 18 comme représenté à la figure 1 constituent un système redondant, c'est-à-dire qu'il existe plusieurs configurations possibles des vérins correspondant à une position donnée de l'objet mobile 2, contrairement aux modes de réalisation des figures 4 et 5 qui, eux, ne sont pas redondants. Cette redondance du mode de réalisation de la figure 1 constitue une caractéristique particulièrement avantageuse car elle peut être mise à profit pour accroître le pouvoir d'accélération du système. En effet, du fait qu'il existe une multiplicité de configurations possibles des vérins correspondant à une position donnée de l'objet mobile 2, il existe une infinité de trajectoires possibles dans l'espace articulaire du dispositif pour provoquer une trajectoire donnée de l'objet mobile 2. On peut alors utiliser ces degrés de liberté supplémentaires pour optimiser la trajectoire, c'est-à-dire pour exploiter à chaque instant l'accélération maximale permise par les vérins et ainsi déplacer l'objet mobile 2 le plus vite possible entre une position de départ et une position d'arrivée.

On soulignera ici la légèreté du dispositif manipulateur agencé selon l'invention. D'une façon générale, tous les dispositifs manipulateurs de type parallèle, auquel appartient le dispositif de l'invention, se présentent certes intrinsèquement sous une forme plus légère que les dispositifs manipulateurs du type série. Cette légèreté a essentiellement deux raisons :
- la structure se présente d'une façon relativement bien triangulée et offre donc un rapport (masse utile)/(masse morte) extrêmement favorable ;
- la partie morte de tous les organes moteurs (stator pour un moteur électrique, corps de vérin pour un vérin hydraulique ou pneumatique) est fixée sur le support fixe ; elle n'est donc pas mobile, vis-à-vis de l'organe moteur situé directement en amont, comme c'est au contraire le cas dans les chaînes cinématiques du type série.

Toutefois, compte tenu de la légèreté accrue qu'il est possible de conférer à certains organes du dispositif manipulateur conforme à l'invention, ce dispositif présente des inerties encore moindres que les dispositifs manipulateurs du type parallèle actuellement connus, et ses performances en matière d'accélération s'en trouvent encore accrues.

Ainsi, la redondance du système alliée à une légèreté très poussée confère au dispositif de l'invention un très grand pouvoir d'accélération, ce qui permet une diminution sensible des temps de cycle, à la satisfaction des utilisateurs.

Par ailleurs, la conception particulière à laquelle on a recours pour assurer le parallélisme des barreaux 12c et 13c autorise un débattement angulaire beaucoup plus important que celui qui était permis par une structure à parallélogramme classique. Le champ d'utilisation du dispositif se trouve, là encore, élargi.

La structure redondante des moyens actionneurs autorise, également, un fonctionnement en mode dégradé en présence d'un ou plusieurs organes moteurs en panne, ce qui peut se révéler utile dans certaines utilisations.

Enfin, la structure de type parallèle du dispositif manipulateur de l'invention peut aisément se concevoir sous forme modulaire, ce qui facilite la fabrication et la maintenance. Il en résulte des économies non négligeables.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

Par exemple, on peut monter sur l'élément 2 un axe à rotation, conférant ainsi au dispositif manipulateur un degré de rotation supplémentaire particulièrement intéressant en robotique pour les applications impliquant la rotation d'objets.

## Revendications

1. Dispositif manipulateur permettant de déplacer, dans l'espace, un objet de manière telle que celui-ci puisse conserver au cours de son déplacement une attitude prédéterminée, ledit dispositif comportant une embase fixe (1), un élément mobile (2) constituant le susdit objet ou auquel est raccordé le susdit objet et au moins trois moyens actionneurs (3) interposés entre la base (1) et l'élément mobile (2) et mutuellement écartés angulairement de façon régulière, chacun de ces moyens actionneurs (3) étant actif dans un plan sensiblement vertical et comportant :
- une articulation (9) déplaçable selon une trajectoire circulaire (C), sise dans le susdit plan sensiblement vertical,
- un organe moteur supporté par la base (1) et connecté, à son extrémité mobile, à la susdite articulation (9), etc organe moteur (4) étant apte à provoquer un déplacement linéaire, dans le susdit plan, de son extrémité mobile,
- et un organe de liaison (8) de longueur fixe interposé entre l'élément mobile (2) et l'articulation (9) auxquels il est respectivement articulé en rotation,
caractérisé en ce que, pour chaque moyen actionneur (3):
- l'organe moteur comprend au moins un vérin (4) qui est supporté par la base (1) de manière à pouvoir pivoter (en 6) par rapport à celle-ci dans le susdit plan vertical,
- la trajectoire circulaire de l'articulation déplaçable est centrée en un point fixe (O) de la base (1) situé dans ledit plan vertical et ne coïncidant pas avec l'axe de pivotement (6) du vérin (4) constituant l'organe moteur,
- l'organe de liaison (8) de longueur fixe comprend une barre (10) supportant à ses extrémités deux pièces rotatives desquelles sont solidaires respectivement deux pièces de raccordement (12, 13) liées à rotation respectivement à la susdite articulation (9) et à l'élément mobile (2), un organe de transmission d'attitude (14) s'étendant, en outre, entre les deux pièces rotatives pour accoupler celles-ci de manière telle que tout déplacement en rotation de l'une des pièces rotatives soit transformé en un déplacement identique, en sens et en amplitude, de l'autre pièce rotative et que les axes (12c, 13c) de liaison à rotation des deux pièces de raccordement (12, 13) avec respectivement l'articulation (9) et l'élément mobile (2) demeurent en permanence mutuellement parallèles,
- toutes les articulations s'effectuant autour d'axes sensiblement perpendiculaires au susdit plan vertical.

2. Dispositif manipulateur selon la revendication 1, caractérisé en ce que les pièces rotatives sont des roues (11) de sensiblement même diamètre.

3. Dispositif manipulateur selon la revendication 1 ou 2, caractérisé en ce que l'organe de transmission d'attitude (14) est un lien sans fin s'enroulant sur les deux pièces rotatives.

4. Dispositif manipulateur selon la revendication 3, caractérisé en ce que le lien sans fin (14) est une courroie crantée.

5. Dispositif manipulateur selon l'une quelconque des revendications 1 à 4, caractérisé en ce que le rayon de la trajectoire circulaire (C) de déplacement de l'articulation est matérialisé par une bielle (15, 16) s'étendant entre ladite articulation (9) et le point fixe (O) de la base (1) auxquels il est articulé.

6. Dispositif manipulateur selon la revendication 5, caractérisé en ce que la bielle est une bielle (15) de longueur fixe.

7. Dispositif manipulateur selon la revendication 6, caractérisé en ce que l'organe moteur comprend deux vérins (4, 16) disposés, dans le susdit plan vertical, de part et d'autre de la bielle de longueur fixe (15).

8. Dispositif manipulateur selon la revendication 5, caractérisé en ce que la bielle possède une longueur réglable, ce grâce à quoi on peut ajuster le rayon de la trajectoire circulaire de l'articulation.

9. Dispositif manipulateur selon la revendication 8, caractérisé en ce que la bielle de longueur variable est constituée par un verin (18).

## Patentansprüche

1. Handhabungsvorrichtung , welche es ermöglicht, einen Gegenstand derart im Raum zu verlagern, daß dieser während seiner Verlagerung eine vorbestimmte räumliche Orientierung bewahren kann, wobei die Vorrichtung eine feste Basis (1), ein den Gegenstand bildendes oder mit dem Gegenstand verbundenes, bewegbares Element (2) und wenigstens drei Betätigungsmittel (3) umfaßt, welche zwischen der Basis (1) und dem bewegbaren Element (2) angeordnet sind und winkelmäßig gegenseitig gleichmäßig beabstandet sind, wobei jedes dieser Betätigungsmittel (3) in einer im wesentlichen vertikalen Ebene wirkt und umfaßt:
ein entsprechend einer in der im wesentlichen vertikalen Ebene liegenden, kreisförmigen Trajektorie (C) verlagerbares Gelenk (9),
ein von der Basis (1) getragenes Antriebselement, welches an seinem bewegbaren Ende mit dem Gelenk (9) verbunden ist, wobei das Antriebselement (4) dazu geeignet ist, eine lineare Verlagerung seines bewegbaren Endes in besagter Ebene zu bewirken,
und ein Verbindungselement (8) fester Länge, welches zwischen dem bewegbaren Element (2) und dem Gelenk (9) angeordnet ist, an welchen es jeweils zur Drehung angelenkt ist,
dadurch gekennzeichnet, daß
bei jedem Betätigungsmittel (3):
das Antriebselement wenigstens einen Zylinder (4) umfaßt, welcher von der Basis (1) derart getragen ist, daß er (bei 6) relativ zu dieser in besagter vertikaler Ebene schwenkbar ist,
die kreisförmige Trajektorie des verschiebbaren Gelenks in einem festen Punkt (0) der Basis (1) zentriert ist, welcher in der vertikalen Ebene angeordnet ist und mit der Schwenkachse (6) des das Antriebselement bildenden Zylinders (4) nicht zusammenfällt,
das Verbindungselement (8) fester Länge einen Stab (10) umfaßt, welcher an seinen Enden zwei Drehteile trägt, mit welchen jeweils zwei zur Drehung mit dem Gelenk (9) bzw. dem bewegbaren Element (2) verbundene Verbindungsteile (12, 13) drehfest verbunden sind, wobei sich ferner ein Übertragungselement (14) der räumlichen Orientierung zwischen den zwei Drehteilen erstreckt, um diese derart zu koppeln, daß jede Drehverlagerung des einen der Drehteile in eine in Richtung und Amplitude identische Verlagerung des anderen Drehteils transformiert wird, und daß die Achsen (12c, 13c) der Drehverbindung der zwei Verbindungsteile (12, 13) mit dem Gelenk (9) bzw. dem bewegbaren Element (2) gegenseitig dauernd parallel bleiben,
alle Gelenkdrehungen um Achsen erfolgen, welche zu der vertikalen Ebene im wesentlichen orthogonal sind.

2. Handhabungsvorrichtung nach Anspruch 1, dadurch gekennzeichnet, daß die Drehteile Räder (11) mit im wesentlichen gleichen Durchmesser sind.

3. Handhabungsvorrichtung nach Anspruch 1 oder 2, dadurch gekennzeichnet, daß das Ubertragungselement (14) der räumlichen Orientierung ein über die zwei Drehteile laufendes Endlosband ist.

4. Handhabungsvorrichtung nach Anspruch 3, dadurch gekennzeichnet, daß das Endlosband (14) ein Zahnriemen ist.

5. Handhabungsvorrichtung nach einem der Ansprüche 1 bis 4, dadurch gekennzeichnet, daß der Radius der kreisförmigen Trajektorie (C) der Verlagerung des Gelenks durch ein Stangenelement (15, 16) verwirklicht ist, welches sich zwischen dem Gelenk (9) und dem festen Punkt (0) der Basis (1) erstreckt, an denen es angelenkt ist.

6. Handhabungsvorrichtung nach Anspruch 5, dadurch gekennzeichnet, daß das Stangenelement ein Stangenelement (15) mit fester Länge ist.

7. Handhabungsvorrichtung nach Anspruch 6, dadurch gekennzeichnet, daß das Antriebselement zwei Zylinder (4, 16) umfaßt, welche in besagter vertikaler Ebene beidseits des Stangenelements (15) mit fester Länge angeordnet sind.

8. Handhabungsvorrichtung nach Anspruch 5, dadurch gekennzeichnet, daß das Stangenelement eine regelbare Länge aufweist, mittels derer der Radius der kreisförmigen Trajektorie des Gelenks einstellbar ist.

9. Handhabungsvorrichtung nach Anspruch 8, dadurch gekennzeichnet, daß das Stangenelement mit variabler Länge von einem Zylinder (18) gebildet ist.

## Claims

1. A handling device enabling an object to be displaced in three dimensions in such a manner as to enable the object to conserve a predetermined attitude while it is being displaced, said device comprising a fixed base (1), a moving element (2) constituting said object or to which said object is connected, and at least three actuator means (3) interposed between the base (1) and the moving element (2) and mutually offset by angles of about 120°, each of said actuator means (3) being active in a substantially vertical plane and comprising:
a hinge (9) which is displaceable along a circular trajectory (C) lying in the above-mentioned substantially vertical plane;
a drive member supported by the base (1) and connected at its moving end to said hinge (9), said drive member (4) being suitable for imparting linear displacement to its moving end in said plane; and
a link member (8) of fixed length interposed between the moving element (2) and the hinge (9) and rotatably hinged to each of them;
the device being characterized in that for each actuator means (3):
the drive member comprises at least one jack (4) which is supported by the base (1) so as to be capable of pivoting (at 6) relative thereto in said vertical plane;
the circular trajectory of the displaceable hinge is centered on a fixed point (O) of the base (1) situated in said vertical plane and not coinciding with the pivot axis (6) of the jack (4) constituting the drive member;
the fixed length link member (8) comprises a bar (10) supporting a rotary part at each of its ends, said rotary parts being secured to two respective yokes (12, 13) which are respectively rotatably hinged to said hinge (9) and to said moving element (2), an attitude transmission member (14) also extending between said two rotary parts to couple them together in such a manner that any rotary displacement of one of the rotary parts is transformed into displacement that is identical in direction and amplitude of the other rotary part, and that the rotary connection axes (12c, 13c) of the two yokes (12, 13) with the hinge (9) and the moving element (2) respectively remain permanently mutually parallel; and
all of the hinges are about axes that are substantially perpendicular to said vertical plane.

2. A handling device according to claim 1, characterized in that the rotary parts are wheels (11) of substantially the same diameter.

3. A handling device according to claim 1 or 2, characterized in that the attitude transmission member (14) is an endless link wound over the two rotary parts.

4. A handling device according to claim 3, characterized in that the endless link (14) is a cog belt.

5. A handling device according to any one of claims 1 to 4, characterized in that the radius of the circular trajectory (3) over which the hinge is displaced is set by a connecting rod (15, 16) extending between said hinge (9) and the fixed point (O) on the base (1) and hinged to both of them.

6. A handling device according to claim 5, characterized in that the connecting rod is a rod (15) of fixed length.

7. A handling device according to claim 6, characterized in that the drive member comprises two actuators (4, 16) disposed in said vertical plane on either side of the connecting rod of fixed length (15).

8. A handling device according to claim 5, characterized in that the connecting rod is of adjustable length, thereby enabling the radius of the circular trajectory of the hinge to be adjusted.

9. A handling device according to claim 8, characterized in that the variable length connecting rod is constituted by an jack (18).
